# EUROPÄISCHE PATENTSCHRIFT

(11) **EP 4 267 796 B1**
(45) Veröffentlichungstag und Bekanntmachung des Hinweises auf die Patenterteilung: **27.08.2025**
(21) Anmeldenummer: 21824495.2
(22) Anmeldetag: 26.11.2021
(51) Int. Cl.: E01B 31/13, B23C 5/24

(54) **VORRICHTUNG ZUM FRÄSEN EINES PROFILS, ZUGEHÖRIGES VERFAHREN UND REFERENZKÖRPER**
DEVICE FOR MILLING A PROFILE, ASSOCIATED METHOD AND REFERENCE BODY
DISPOSITIF DE MEULAGE DE PROFILÉ, PROCÉDÉ ET CORPS DE RÉFÉRENCE ASSOCIÉS

(30) Priorität: 22.12.2020 DE 102020134658
(43) Veröffentlichungstag der Anmeldung: 01.11.2023
(73) Patentinhaber: Schweerbau International GmbH & Co. KG, 31675 Bückeburg (DE)
(72) Erfinder: MEVERT, Frank, 31714 Lauenhagen (DE)
(74) Vertreter: Scheffler, Jörg
(86) Internationale Anmeldenummer: PCT/EP2021/083206
(87) Internationale Veröffentlichungsnummer: WO 2022/135832

(56) Entgegenhaltungen:
- EP-A1- 3 026 179
- GB-A- 1 211 291

## Beschreibung

Die Erfindung betrifft eine mobile Vorrichtung zum Fräsen eines Profils insbesondere einer für Schienenfahrzeuge bestimmten Gleisschiene, mit einer Lauffläche und einer Seitenfläche, wobei die Vorrichtung in einer Vorschubrichtung entlang einer Längserstreckung des Profils beweglich ist und zumindest einen um eine Drehachse rotationsbeweglich antreibbaren Fräskörper mit einer Vielzahl von Schneidplatten aufweist, wobei zumindest einzelne der Schneidplatten zur Fixierung in einer jeweiligen Aufnahme mittels zumindest eines Klemmkörpers gegen ein als Anschlag ausgeführtes Widerlager kraftschlüssig vorspannbar sind, wobei zumindest einzelne der Schneidplatten in ihrer jeweiligen Aufnahme mittels eines Stellmittels in radialer oder axialer Richtung auslenkbar und mittels des Klemmkörpers in der eingestellten Position festlegbar sind, wobei das Stellmittel durch ein Druckübertragungsfluid beweglich oder verformbar ausgeführt ist.. Weiterhin betrifft die Erfindung ein Verfahren zur Einstellung zumindest einzelner Schneidplatten der Vorrichtung sowie einen Referenzkörper zur Verwendung bei der Vorrichtung.

Aus der GB 1 211 291 A ist bereits ein Fräswerkzeug mit einem Grundkörper und auswechselbaren Messern, die zur Fixierung in einer jeweiligen Aufnahme mittels zumindest eines Segments gegen eine gegenüberliegende Messeraufnahme kraftschlüssig vorspannbar sind, bekannt. Die Schneidplatten sind in ihrer jeweiligen Aufnahme mittels eines Einstellkolbens in radialer Richtung auslenkbar und mittels eines Spannkolbens in der eingestellten Position festlegbar. Durch einen Druckkolben wird Druck erzeugt, der mittels einer zähflüssigen Masse auf den Einstellkolben übertragen wird. Die Verstellung des Druckkolbens erfolgt durch Drehung einer Spannschraube. Der Einstellkolben wirkt auf das Messer, das in die Innenform eines Zentrierrings gedrückt wird, wobei der Druck gleichzeitig auf alle Messer übertragen werden kann.

Aufgrund vergleichsweise hoher Achslasten und hoher Fahrgeschwindigkeiten werden Schienen oft bis zur Fließgrenze des Schienenwerkstoffs beansprucht und unterliegen daher einem Verschleiß, der sich nachteilig auf das Profil der Lauffläche des Schienenkopfs auswirkt.

Zur Beseitigung der an der Lauffläche von Gleisschienen während des Fahrbetriebsentstehenden Riffeln und Wellen, die die Radsätze der Fahrzeuge zu Schwingungenanregen, welche die Laufruhe der Fahrzeuge stören, einen übermäßigen Verschleiß des Gleisoberbaus und der Fahrzeuge verursachen sowie pfeifende Fahrgeräusche entstehen lassen, ist eine verschleißabhängige Nachbearbeitung erforderlich.

Hierzu ist beispielsweise ein Verfahren für die Bearbeitung von Eisenbahnschienen bekannt, bei welchem eine Vielzahl von rotierenden Schleifscheiben eingesetzt wird, die neben- und hintereinander angeordnet sind, wobei ein Teil der Schleifscheiben entsprechend dem Ursprungsprofil der Schienenköpfe geneigt ist. Mit einem derartigen Schleifverfahren lässt sich eine bessere Annäherung an das Ursprungsprofil der Schienenköpfe erreichen.

Es sind auch Schleifaggregate bekannt, die stirnseitig in Eingriff mit der Schienenoberfläche gebracht werden und vorzugsweise mit einem Kippwinkel gegenüber der zu schleifenden Schienenoberfläche angestellt sind.

Die EP 2 525 933 B1 bezieht sich auf eine Vorrichtung zum spanabhebenden Nachbearbeiten der Lauffläche eines Schienenkopfs mit einem entlang des Schienenkopfs geführten Gestell. Die Bearbeitungswerkzeuge sind als gegensinnig drehend antreibbare Stirnfräser ausgebildet, deren Drehachsen in einer gemeinsamen Ebene verlaufen und deren Schneidbereiche einander quer zur Längsrichtung des Schienenkopfs überlappen.

Zur Erhöhung der Bearbeitungsgeschwindigkeit ist es beispielsweise aus der DE 32 22 208 A1 bekannt, Fräswerkzeuge einzusetzen, deren in mehreren axialen Gruppen über den Umfang des Messerkopfs verteilte Schneiden das Schienenkopfprofil nachbilden.

Der durch ein solches Umfangfräsen bedingte bogenförmige Schnittverlauf der einzelnen Schneiden des Fräswerkzeugs führt allerdings zu einer in Schienenlängsrichtung gewellten Oberfläche des Schienenkopfs, wobei sich die Oberflächenqualität mit zunehmender Vorschubgeschwindigkeit wegen des größer werdenden Abstands der Spanabträger aufeinanderfolgender Schneiden verschlechtert.

Auch die WO 02/06587 A1 beschreibt ein Verfahren zum Reprofilieren mindestens des konvexen Teils des Schienenkopf-Querschnittprofils einer Schiene durch Umfangfräsen mit mehr als fünf in Längsrichtung der Schiene nebeneinanderliegenden Frässpuren.

Weitere Vorrichtungen zum spanabhebenden Nachbearbeiten, insbesondere zum Fräsen von im Gleis verlegten Schienenköpfen, werden in den Druckschriften EP 0 952 255 B1, US 5,549,505 A, EP 0 668 398 B1, EP 0 668 397 B1, US 4,275,499 A und EP 0 148 089 A2 beschrieben.

Außerdem sind beispielsweise durch die DE 28 41 506 C2 Vorrichtungen bekannt, bei denen die Schienenköpfe mit einem sogenannten Schienenhobel bearbeitet werden. Nachteilig beim Hobeln, vor allem gegenüber den Fräsverfahren, ist eine vergleichsweise lange Bearbeitungsdauer aufgrund der erforderlichen mehreren Überfahrten über den zu bearbeitenden Schienenabschnitt.

Die AT 400 863 B beschreibt eine Vorrichtung zum spanabhebenden Nachbearbeiten eines Schienenkopfs mithilfe eines entlang des Bearbeitungsstreifens geführten, umlaufenden Werkzeugs, bei dem die Schneiden in Trägern gehalten sind, die Glieder einer endlos um Umlenkräder geführten Gliederkette bilden

Die WO 2020 / 190 498 A1 bezieht sich auf ein Verfahren zum Schleifen von Schienen, bei dem der Abtrag anhand von Daten über den physischen Zustand jeder Schiene sowie eines gewünschten Schienenprofils ermittelt wird. Daraus wird ein individuelles Schleifprofil für jedes Schienensegment erstellt, das auch die Konfiguration der einzelnen Schleifmodule sowie individuelle Schleifsollwerte der einzelnen Schleifmodule berücksichtigt. Das benutzerdefinierte Schleifmuster kann die Bestimmung einer maximalen Betriebsgeschwindigkeit beinhalten, mit der die Schienenschleifmaschine die Schiene überfährt.

Bei den aus dem Stand der Technik bekannten Fräswerkzeugen für das Abwälzfräsen werden die Schneidplatten beispielsweise in einer liegenden Position angeordnet, sodass die Schneidplatten mit ihrer Hauptfläche auf dem Träger aufliegen und mittels einer Fixierschraube durch ein Durchgangsloch der Schneidplatte (Wendeschneidplatte) in Kombination mit einer Distanzplatte zur Höhenanpassung fixiert werden können. Beispielsweise decken acht Schneidplatten das gesamte Querprofil ab, wobei diese in Umfangsrichtung versetzt sind und daher nacheinander in Eingriff kommen. Bei der Bearbeitung einer Gleisschiene mittels Fräswerkzeugen wird zwar ein großer Materialabtrag erreicht, allerdings erfordert die so erzeugte Oberflächenbeschaffenheit eine Nachbearbeitung durch Schlichten. Demgegenüber wird mit den bekannten Schleifverfahren zwar ein geringerer Materialabtrag als beim Fräsen erreicht, allerdings lassen sich beim Schleifen höhere Vorschubgeschwindigkeiten erreichen, sodass in der Praxis aufgrund der jeweiligen Randbedingungen sowohl Fräs- als auch Schleifverfahren zum Einsatz kommen. Daher ist es derzeit üblich, Schienen in einem Arbeitsgang mit einer Fräse zu bearbeiten und die durch das Fräsen auf der bearbeiteten Oberfläche auftretenden Bearbeitungsspuren wie Welligkeiten oder Spurbilder durch Schleifen zu reduzieren.

Der Erfindung liegt die Aufgabe zugrunde, eine Möglichkeit zu schaffen, bei der Fräsbearbeitung von Profilen insbesondere einer für Schienenfahrzeuge bestimmten Gleisschiene wesentlich höhere Anforderungen an die Genauigkeit erfüllen zu können. Insbesondere sollen auftretende Abweichungen auf wenige 1/1000 mm reduziert werden, sodass auf eine Nachbearbeitung gefräster Profile verzichtet werden kann.

Diese Aufgabe wird erfindungsgemäß mit einer Vorrichtung gemäß den Merkmalen des Anspruchs 1 gelöst. Die weitere Ausgestaltung der Erfindung ist den Unteransprüchen zu entnehmen.

Erfindungsgemäß ist also eine Vorrichtung vorgesehen, bei der jeweils mehrere Schneidplatten in parallelen Spuren angeordnet sind, die jeweils einem Abschnitt des Querprofils des Profils zugeordnet sind und die zueinander einen Versatz in Umfangsrichtung des Fräskörpers aufweisen.

Somit lassen sich verschiedene, gegebenenfalls auch überlappende Abschnitte des Querprofils mit der jeweils gewünschten Schnitttiefe bearbeiten. In der Praxis kann dabei gegebenenfalls auf die erfindungsgemäße Fixierung aller Schneidplatten verzichtet und einzelne, für das Querprofil weniger relevante Schneidplatten konventionell fixiert werden. Indem mehrere, insbesondere alle in benachbarten parallelen Spuren angeordnete Schneidplatten eines Fräskörpers für das Abwälzfräsen zueinander einen Versatz in Umfangsrichtung, wird eine gleichmäßige Verteilung des Schneideingriffs der Schneidplatten erreicht.

Das Druckübertragungsfluid ist insbesondere eine Hydraulikflüssigkeit wie beispielsweise ein Hydrauliköl. Das Stellmittel kann hierzu beispielsweise zumindest einen insbesondere translatorisch beweglichen Kolben aufweisen und in radialer oder axialer Richtung insbesondere stufenlos auslenkbar und mittels des Klemmkörpers in der eingestellten Position ohne Änderung der Orientierung kraftschlüssig festlegbar sein.

Dadurch gelingt es erstmals, bei Stillstandszeiten der Bearbeitung des Profils mittels eines Fräskörpers mit umfangsseitig oder stirnseitig angeordneten Schneidplatten, die für Gleisschienen geltenden hohen Anforderungen zur Vermeidung von unerwünschten Wellenmustern ohne eine Nachbearbeitung und insbesondere ohne einen in der Praxis bisher unvermeidlichen Nacharbeitsgang durch Schleifen zuverlässig zu erfüllen. Dabei kann die Bearbeitung des Profils mit Abweichungen von weniger als 1/100 mm durchgeführt werden. Bei der so erfindungsgemäß verbesserten Fräsbearbeitung bleiben die prinzipiell bei der Fräsbearbeitung im Verhältnis zu einer Schleifbearbeitung immanenten technischen Vorteile, wie insbesondere die hohe Abtragsleistung sowie die geringe Wärmeentwicklung bei der Bearbeitung, uneingeschränkt erhalten. Darüber hinaus lässt sich aber auch im Gegensatz zur Schleifverfuhr ein definierter Abtrag als Schnitttiefe einstellen, welche in unterschiedlichen Spuren bzw. Abschnitten des Querprofils der Schiene auch abweichend bemessen sein kann. Der Materialabtrag kann so beispielsweise gezielt auf diejenigen Bereiche des Querprofils einer Gleisschiene beschränkt werden, die einer Nachbearbeitung bedürfen, sodass der Materialabtrag gegebenenfalls insgesamt reduziert werden kann. Der erzeugte Materialabtrag wird dabei zudem rückstandslos aufgenommen, sodass ein unerwünschter Materialeintrag in das Gleis vermieden wird.

Die erfindungsgemäß erzielbaren geringen Toleranzen lassen sich durch die an sich bekannte Möglichkeit zum Höhenausgleich bzw. zur Anpassung der relativen radialen Positionen verschiedener, vor allem benachbarter Schneiden desselben Fräskörpers durch Distanzscheiben nicht erreichen. Vielmehr wäre es bereits aus praktischen Gründen unmöglich, Distanzscheiben zum Ausgleich von Abweichungen im Bereich von wenigen 1/1000 mm einzusetzen. Demgegenüber werden durch die individuelle Verstellung der verschiedenen Schneidplatten durch einen oder mehrere Kolben oder Stempel des Stellmittels durch Druckänderung eines zur Kolbenauslenkung bestimmten und mit diesem mittelbar oder unmittelbar in Verbindung stehenden Druckübertragungsfluids erfindungsgemäß die Voraussetzungen für eine derart präzise Verstellmöglichkeit geschaffen, die mittels einer rein mechanischen Einstellung bzw. Fixierung der Schneidplatten nicht erzielt werden könnten.

Es hat sich gezeigt, dass durch die Funktionentrennung der durch das Stellmittel erzielbaren Verlagerung der Schneidplatte in die gewünschte Sollposition einerseits sowie die klemmschlüssig und somit stufenlose Fixierung der so eingestellten Position der Schneidplatte mittels des Klemmkörpers andererseits die Voraussetzungen für die Erfüllung derart hoher Genauigkeitsanforderungen geschaffen werden.

Darüber hinaus wird ein vergleichsweise geringer Platzbedarf der Vorrichtung dadurch erreicht, dass das auf die Schneidplatte wirkende Stellmittel lediglich durch eine Leitungsverbindung für das Druckübertragungsfluid mit einem hiervon bedarfsweise räumlich getrennten Druckerzeugungsmittel verbunden ist, wodurch eine kompakte Bauform des Stellmittels realisiert werden kann. Zudem weist die Vorrichtung dadurch ein geringes Eigengewicht auf und erfordert lediglich geringe konstruktive Ausführungen an dem Fräskörper. Außerdem wird so eine gute Zugänglichkeit aufgrund der von der jeweiligen Schneidplatte räumlich getrennten Anordnung des Druckerzeugungsmittels erreicht. Durch den geringen Platzbedarf lassen sich bei einer vorhandenen Fläche, insbesondere also der Umfangsfläche des Fräskörpers, eine größere Zahl von Schneidplatten in einer jeweiligen Spur über den Umfang verteilt anordnen als in Praxis bisher üblich bzw. möglich. Weil der Vorschub je Schneidplatte bei der Bearbeitung des Profils limitiert ist, kann so durch eine entsprechend größere Anzahl von Schneidplatten auch der Vorschub bezogen auf einen vollständigen Umlauf des Fräskörpers vergrößert werden, sodass hierdurch auch die Vorschubgeschwindigkeit ohne unerwünschte Nachteile hinsichtlich der unerwünschten Welligkeit beim Bearbeiten des Profils erhöht werden kann.

Zum Verständnis der Erfindung ist zudem auch die Erkenntnis wesentlich, dass das Stellmittel nicht auf einen beweglichen Kolben beschränkt ist, der druckabhängig in einer üblichen konstruktiven Ausführung in einem Zylinder translatorisch in verschiedene Positionen verlagert werden kann. Vielmehr kann das Stellmittel unter Berücksichtigung der geringen Stellwege der Schneidplatten zur Erreichung der Soll-Position auch durch eine bloße elastische Verformung die Verlagerung der Schneidplatte herbeiführen. Auf diese Weise kann mit geringem Aufwand ein das Druckübertragungsfluid beinhaltendes, geschlossenes System für die Auslenkung der Schneidplatten geschaffen werden, das somit auch ohne einen beweglichen Kolben auskommt. In der Praxis eignet sich hierfür im weitesten Sinne jeder entgegen einer elastischen Rückstellkraft durch das Druckübertragungsfluid verformbare Expansions- oder Dehnungskörper mit entsprechend geeignetem Verformungsverhalten.

Bei einer praxisgerechten Ausführungsform der Erfindung ruhen die in ihrer jeweiligen Aufnahme eingesetzten Schneidplatten auf zumindest einem, vorzugsweise zwei Hydraulikstempeln bzw. -kolben des Stellmittels. Die erforderliche Druckdifferenz zur Verlagerung wird dadurch erzeugt, dass in ein das Druckübertragungsfluid einschließende Leitungsvolumen ein Stellkörper als Verdränger eingeführt, beispielsweise eingeschraubt wird und infolge der Druckerhöhung in dem Druckübertragungsfluid die Auslenkung oder Verformung des Stellmittels bewirkt wird, wobei der Stellweg des Stellkörpers durch den Stellweg oder durch das Drehmoment kontrolliert bzw. gesteuert werden kann.

Eine besonders vorteilhafte Ausführungsform der Erfindung wird dadurch erreicht, dass bei Fräskörpern für das Abwälzfräsen die Schneidplatten mit ihrer Hauptachse eine radiale Orientierung in der Aufnahme einnehmen und mit einer einer Schneide abgewandten Stirnfläche auf einer mit dem Stellmittel kinematisch gekoppelten Auflage der Aufnahme der Schneidplatte radial ausgerichtet sind bzw. bei Fräskörpern für das Stirnfräsen entsprechend mit ihrer Hauptachse eine axiale Orientierung in der Aufnahme einnehmen.

Dabei können je Aufnahme bzw. je Schneidplatte ein oder mehrere Stellmittel vorgesehen sein, die vorzugsweise baugleich ausgeführt sind. Weiterhin können mehrere Stellmittel gemeinsam, insbesondere durch kommunizierende Verbindung des Druckübertragungsfluids oder separat angesteuert werden, um so die gewünschte Soll-Position der Schneidplatten mit der gewünschten, reproduzierbaren Genauigkeit einstellen zu können.

Die Einstellung bzw. Anpassung des Fluiddrucks des Druckübertragungsfluids könnte mittels einer Pumpe, insbesondere eines Kompressors, erzeugt und durch Betätigung eines Absperrorgans aufrechterhalten werden. Besonders praxisgerecht ist hingegen eine Variante der erfindungsgemäßen Vorrichtung, bei welcher die Vorrichtung zur Anpassung des Fluiddrucks des Druckübertragungsfluids und zur Betätigung des Stellmittels, um die Schneidplatten zu verlagern, zumindest einen auf das Druckübertragungsfluid wirkenden, einstellbaren Verdrängerkörper aufweist, der insbesondere ein Leitungsvolumen der das Druckübertragungsfluid aufnehmenden Fluidleitung verändert. Bei einer einfachen Variante ist der Verdrängerkörper durch einen Abschnitt eines Gewindebolzens gebildet, sodass lediglich eine Drehbewegung erforderlich ist, um den Fluiddruck zu verändern, wobei der Stellweg durch das Drehmoment kontrolliert bzw. gesteuert wird.

Selbstverständlich kann dabei auch das Prinzip der hydraulischen Presse, wonach sich die Kräfte proportional zu den jeweiligen Flächen verhalten, genutzt werden, sodass ein Stellkörper bzw. Verdränger mit einem vergleichsweise geringen Querschnitt und der Druckübertragung auf einen im Querschnitt großflächigeren Kolben zu einer großen Wirkkraft an dem Stellmittel bzw. Kolben führt.

Eine andere, ebenfalls besonders zweckmäßige Variante der erfindungsgemäßen Vorrichtung wird dadurch realisiert, dass die Klemmkörper mittels einer Schraubverbindung einstellbar sind, die durch gegensinnige Drehrichtung entweder zur Fixierung oder zur Trennung der Klemmkörper ausgeführt ist. Durch die hierzu abschnittsweise mit gegenläufigen Gewindeabschnitten ausgestattete, als Spindel ausgeführte Schraubverbindung können die Schneidplatten nicht nur schnell in der gewünschten SollPosition gesichert, sondern auch bedarfsweise aus der Aufnahme herausgelöst werden. Zudem erleichtert diese mit einem Links- und Rechtsgewinde ausgestattete Schraubverbindung auch die Einstellung einer vorbestimmten, auf den Klemmkörper wirkenden Fixierkraft.

Die Vorrichtung könnte in vorteilhafter Weise als ein Stirn- bzw. Planfräser ausgeführt sein, an dem die Schneidplatten stirnseitig angeordnet sind, und als ein Umfangs- bzw. Abwälzfräser mit Schneidplatten am Umfang des Fräskörpers. Bei einer weiteren Variante der erfindungsgemäßen Vorrichtung sind die Schneidplatten des Fräskörpers durch das Stellmittel in ihrer jeweiligen Aufnahme lediglich in denjenigen Bereichen des Querprofils und/oder Spuren des Fräskörpers einstellbar, in denen das Querprofil und/oder die Schneiden mit der Drehachse des als Abwälzfräser bzw. Umfangsfräser ausgeführten Fräskörpers einen spitzen Winkel von weniger als 45° einschließen bzw. in denen das Querprofil und/oder die Schneiden mit der Drehachse des als Stirnfräser ausgeführten Fräskörpers einen Winkel von mehr als 15° einschließen.

Grundsätzlich hat der als Abwälzfräser bzw. Umfangsfräser ausgeführte Fräskörper eine der Kontur des Querprofils angepasste konkave Formgebung. Dadurch kommt es im Bereich des lateralen Abschnitts des Querprofils und der diesem Abschnitt zugeordneten Schneidplatten, die in einem Winkel von zwischen 15° und 90° zu dem Querprofil angeordnet sind, zu einer Fräsbearbeitung, die hinsichtlich der relativen Orientierung der Schneidplatten gegenüber der zu bearbeitenden Oberfläche der Schiene dem Stirnfräsen entspricht oder die Bearbeitungsqualität erzielen lässt. Umgekehrt kann die erfindungsgemäße Fixierung der Schneidplatten auch bei entsprechend konkav geformten Planfräsern vor allem in solchen Abschnitten eingesetzt werden, bei denen die Schneide einen entsprechenden Winkel mit der Querschnittsebene bezogen auf die Drehachse einschließt.

Die erfindungsgemäße Aufgabe wird weiterhin noch mit einem Verfahren zur Positionierung, Einstellung und/oder Kalibrierung zumindest einzelner Schneidplatten relativ zu der jeweiligen Aufnahme der Vorrichtung mittels des translatorisch beweglichen Stellmittels gelöst, indem das Stellmittel durch ein Druckübertragungsfluid ausgelenkt wird, wobei der Fluiddruck durch einen als Verdränger wirkenden Stellkörper verändert und dadurch das Stellmittel eingestellt wird, bis eine dem Stellmittel abgewandte Schneide der jeweiligen Schneidplatte eine gewünschte Sollposition erreicht hat. Dabei wird die Schneidplatte in radialer Richtung insbesondere stufenlos ausgelenkt und mittels des Klemmkörpers in den eingestellten radialen Positionen ohne Änderung der Orientierung kraftschlüssig festgelegt. Das Stellmittel wird von dem Druckübertragungsfluid beaufschlagt und druckabhängig ausgelenkt, wodurch die Position der in der Aufnahme als Führung mit dem Stellmittel kinematisch gekoppelten Schneidplatte eingestellt wird. Die Fixierung der Schneidplatte erfolgt schließlich durch den Klemmkörper, der in an sich bekannter Weise die Schneidplatte klemmschlüssig vorzugsweise gegen einen in Umfangsrichtung stützenden Anschlag kraftschlüssig und lösbar festlegt. Ein geeignetes Druckübertragungsfluid ist beispielsweise ein Hydrauliköl.

Die Einhaltung bzw. Einstellung der gewünschten Soll-Position der Schneidplatten könnte durch ein berührungsloses Messsystem erfasst bzw. überwacht werden. Besonders Erfolg versprechend ist es hingegen, wenn gemäß einer Variante des erfindungsgemäßen Verfahrens mehrere Schneidplatten nacheinander oder gleichzeitig mit einer vorbestimmten Kraft mittels des jeweiligen Stellmittels gegen einen konvexen Referenzkörper entsprechend dem zu erzeugenden Querprofil bewegt und mit hoher Präzision eingestellt werden. Der Referenzkörper entspricht hinsichtlich des relevanten Querprofils der zu erzeugenden Soll-Form des Profils. Es hat sich nun gezeigt, dass durch eine vor allem kraftgesteuerte Zustellung der Schneidplatten gegen den Referenzkörper mittels des Stellmittels eine überraschend exakte Einstellung der Soll-Position insbesondere auch relativ zu den benachbarten Schneidplatten vorgenommen werden kann, ohne dass hierzu Messwerte erfasst werden müssen. Zudem erfordert die Einstellung der Schneidplatten nur einen geringen manuellen Aufwand, wodurch Fehlbedienungen weitgehend ausgeschlossen sind. Die Verlagerung der einzelnen Schneidplatten kann entsprechend einer vorbestimmten Reihenfolge erfolgen, wobei nacheinander räumlich beabstandete, insbesondere nicht benachbarte Schneidplatten eingestellt werden.

Im Ergebnis könnte in diesem Abschnitt des Querprofils eine Fertigbearbeitung erfolgen, die keiner Nachbearbeitung bedarf, während in dem verbleibenden Abschnitt des Querprofils ein Aufmaß belassen werden kann, welches durch das nachfolgende Planfräsen abgetragen wird. Die Durchführung der Fräsbearbeitung erfolgt vorzugsweise im Gleichlauf mit einer Vorschubbewegung des die Vorrichtung tragenden Fahrzeugs gegenüber dem Profil, wobei eine Bearbeitung im Gegenlauf nicht ausgeschlossen ist.

Ein solcher Referenzkörper zur Verwendung bei einer Vorrichtung und/oder zur Durchführung des Verfahrens ist konvex ausgeführt und dient in einer definierten relativen Sollposition zu der Vorrichtung als Widerlager für zumindest einzelne Schneidplatten, wobei der Referenzkörper mehrere, insbesondere für ein Werkzeug zur Betätigung des Klemmkörpers bestimmte Ausnehmungen aufweist, durch die mittels eines Werkzeugs der Klemmkörper fixiert und die eingestellte Position festlegbar ist. Die Erfindung macht sich dabei die Erkenntnis zunutze, dass die Verlagerung verschiedener Schneidplatten gegen den Referenzkörper als Widerlager nicht nur einfacher durchführbar ist, sondern auch geringeren Fehlereinflüssen unterliegt als die Einstellung bestimmter messtechnisch zu überwachender Positionen. Dementsprechend werden die Schneidplatten mit einer vorbestimmten Kraft gegen den Referenzkörper entsprechend dem zu erzeugenden Querprofil bewegt und lassen sich so mit hoher Präzision einstellen.

Erfindungsgemäß hat der Referenzkörper Ausnehmungen, durch die mittels eines Werkzeugs der Klemmkörper fixiert und die eingestellte Position der Schneidplatten gesichert werden kann.

Die durch die Patentansprüche definierte Erfindung lässt verschiedene Ausführungsformen zu. Zur weiteren Verdeutlichung ihres Grundprinzips ist eine davon in der Zeichnung dargestellt und wird nachfolgend beschrieben.

Diese zeigt in
- Fig. 1: eine perspektivische Ansicht eines Fräskörpers einer erfindungsgemäßen Vorrichtung mit mehreren Schneidplatten;

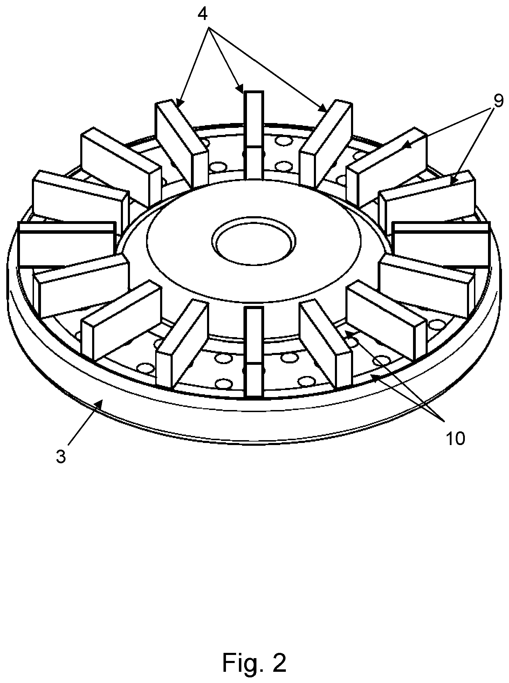

- Fig. 2: eine perspektivische Ansicht des geöffneten Fräskörpers mit einer Anordnung der Schneidplatten auf einer Ausrichtfläche;

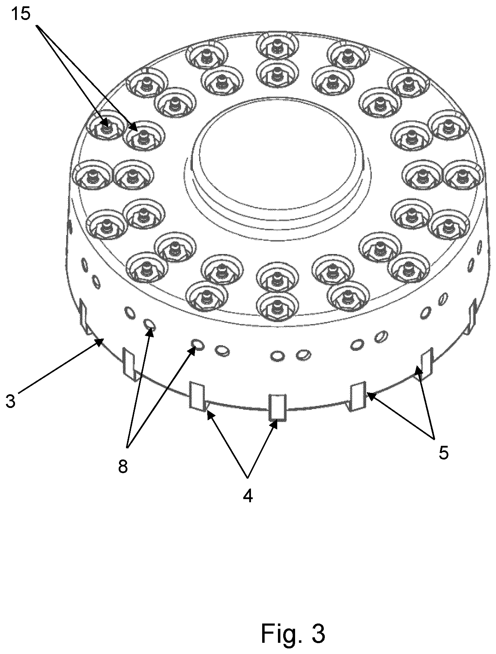

- Fig. 3: eine perspektivische Ansicht des Fräskörpers aus einer rückwärtigen Ansicht;
- Fig. 4: eine Seitenansicht des Fräskörpers in Verbindung mit einem Referenzkörper zur Ausrichtung der Schneidplatten;
- Fig. 5: einen Längsschnitt durch den Fräskörper und den Referenzkörper entlang der Linie V-V in der Figur 4;
- Fig. 6: eine geschnittene Seitenansicht einer Variante des Fräskörpers mit paarweise durch Fluidkanäle gekoppelten Stellmitteln;
- Fig. 7: eine geschnittene Seitenansicht einer weiteren Variante des Fräskörpers mit zentral verbundenen Stellmitteln in Verbindung mit dem Referenzkörper.

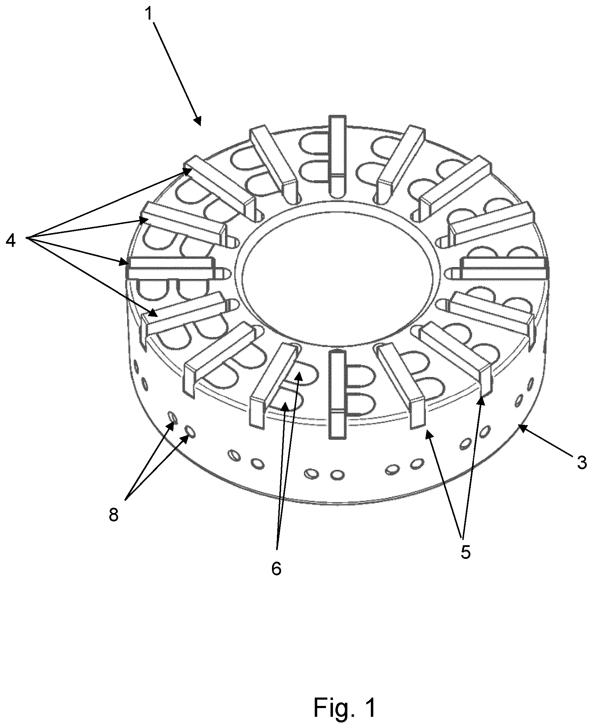

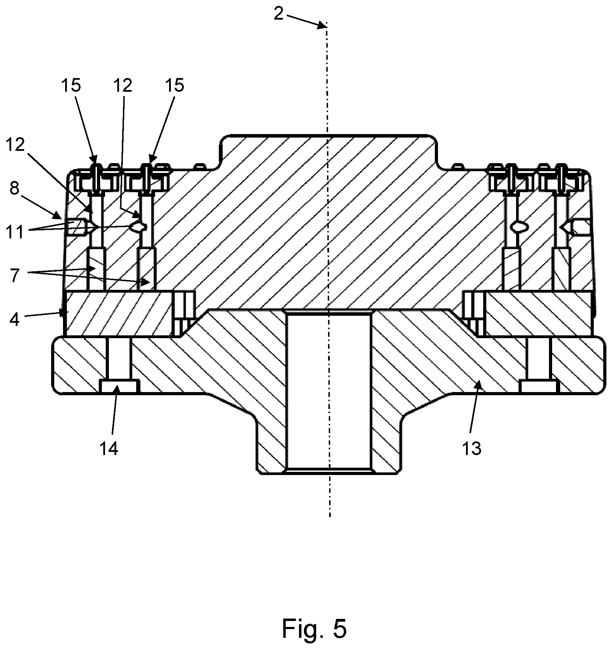

Die Figur 1 zeigt eine entlang einer Längserstreckung eines nicht dargestellten, zu bearbeitenden Profils bewegliche Vorrichtung 1 zur Fräsbearbeitung des Profils. Die Vorrichtung 1 hat einen um eine in der Figur 5 erkennbare Drehachse 2 rotationsbeweglichen Fräskörper 3 mit einer Vielzahl von radialen Schneidplatten 4. Die einzelnen Schneidplatten 4 sind jeweils unabhängig voneinander in einer jeweiligen Aufnahme 5 mittels mehrerer Klemmkörper 6 gegen einen nicht gezeigten Anschlag kraftschlüssig vorspannbar.

Jede der verschiedenen Schneidplatten 4 ist entsprechend der dargestellten, nachstehend näher erläuterten Ausführungsformen durch zwei Kolben 7 eines Stellmittels 8 einstellbar, indem der auf den Kolben 7 wirkende Druck eines Druckübertragungsfluids verändert wird, und es aufgrund dieser Druckänderung des Druckübertragungsfluids zu einer Auslenkung des Kolbens 7 kommt.

Die Schneidplatten 4 liegen hierzu mit einer einer Schneide 9 der Schneidplatte 4 abgewandten Fläche auf einer mit dem Stellmittel 8 kinematisch gekoppelten Auflage 10 der Aufnahme 5 auf.

Auf diese Weise wird durch das Stellmittel 8 eine translatorische Verlagerung der Schneidplatte 4 in die gewünschte Sollposition erreicht, während die klemmschlüssige und somit stufenlose Fixierung der so eingestellten Position der jeweiligen Schneidplatte 4 mittels der Klemmkörper 6 vorgenommen wird.

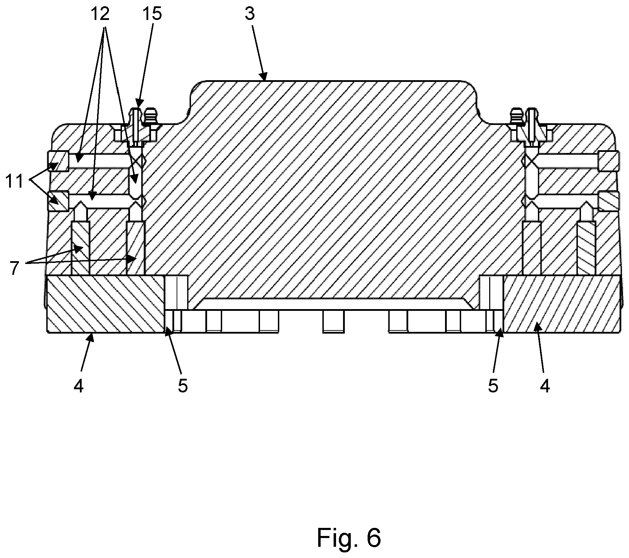

Um den Fluiddruck des Druckübertragungsfluids zu erhöhen, wird ein in den Figuren 5 und 6 gezeigter, auf das Druckübertragungsfluid wirkender Verdrängerkörper 11 innerhalb eines mit dem Druckübertragungsfluid gefüllten Fluidkanals 12 verlagert. Hierzu ist der Verdrängerkörper 11 abschnittsweise mit einem nicht weiter dargestellten, selbst dichtenden Gewinde in einer entsprechenden Gewindeaufnahme in den Fräskörper 3 gekoppelt, sodass die Einstellung der gewünschten Position mit geringem Aufwand manuell, beispielsweise mittels eines Drehmomentschlüssels, vorgenommen werden kann.

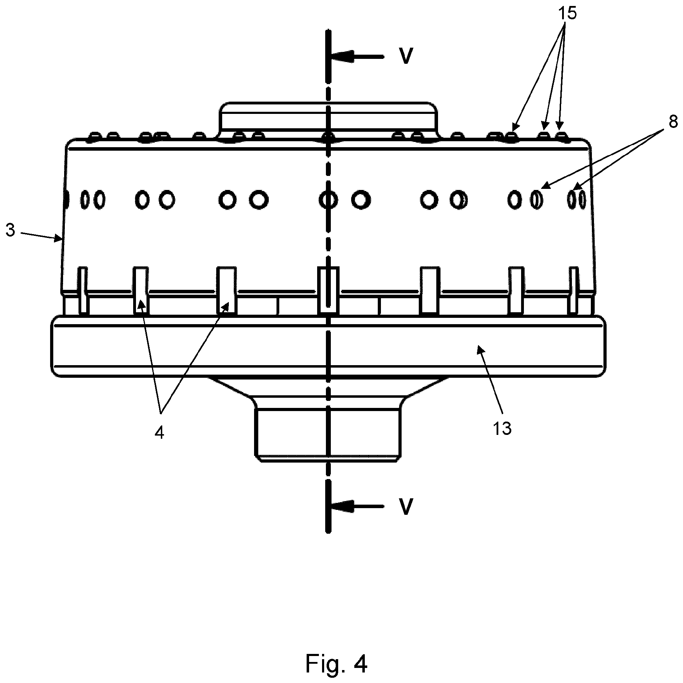

Zur Einstellung wird der Fluiddruck durch den Verdrängerkörper 11 verändert und dadurch das Stellmittel 8 eingestellt, bis eine dem Stellmittel 8 abgewandte Schneide 9 der jeweiligen Schneidplatte 4 eine gewünschte Sollposition erreicht hat, in der die jeweilige Schneidplatte 4 mit einer vorbestimmten Kraft gegen einen in den Figuren 4, 5 und 7 gezeigten Referenzkörper 13 anliegt. Dabei dient der Referenzkörper 13 der Vorrichtung 1 als Widerlager für alle Schneidplatten 4. Nachdem die jeweilige Schneidplatte 4 die vorbestimmte Sollposition erreicht hat, kann durch eine Ausnehmung 14 in dem Referenzkörper 13 hindurch der Klemmkörper 6 betätigt und so die Schneidplatte 4 fixiert werden, ohne dass der Referenzkörper 13 zuvor entfernt werden muss.

In den Figuren 5 bis 7 sind verschiedene Varianten der Vorrichtung 1 gezeigt. In der Figur 5 ist eine Variante zu erkennen, bei der zwei strömungstechnisch getrennte Kolben 7 eines Stellmittels 8 mit einer jeweiligen Zuführung 15 jeweils durch einen gesonderten Verdrängerkörper 11 betätigbar sind. Indem somit die Kolben 7 unabhängig voneinander und asynchron beweglich sind, können die darauf ruhenden Schneidplatten 4 bedarfsweise gegenüber einer Querschnittsebene zu der Drehachse 2 mit einem einstellbaren Winkel gekippt werden.

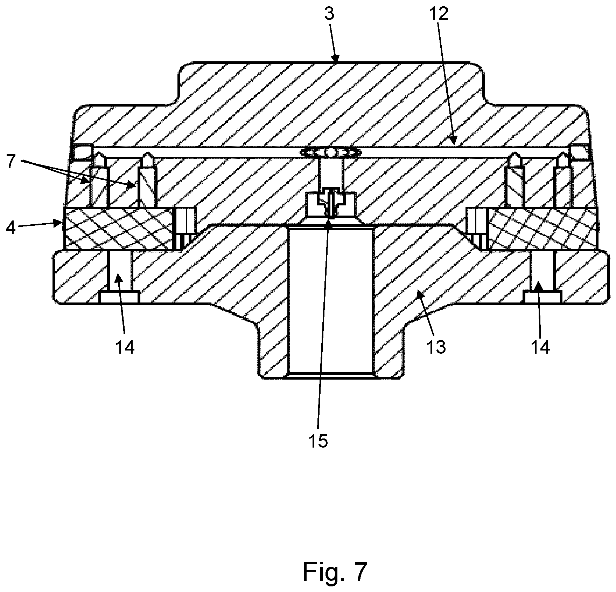

Demgegenüber ist bei den in den Figuren 6 und 7 gezeigten Varianten der auf die beiden Kolben 7 einer Schneidplatte 4 wirkende Druck übereinstimmend konstant. Hierzu sind wiederum zwei Verdrängerkörper 11 vorgesehen, die allerdings parallel auf gekoppelte Fluidleitungen eines gemeinsamen Fluidkanals 12 wirken, sodass der Fluiddruck übereinstimmt. Die beiden Verdrängerkörper 11 wirken somit parallel auf beide, durch eine gemeinsame Zuführung 15 mit Druckübertragungsfluid versorgte Kolben 7, wobei die beiden Verdrängerkörper 11 zur Grobeinstellung einerseits und Feineinstellung andererseits eingerichtet sein können.

Die Figur 7 zeigt darüber hinaus noch ein Variante, bei der durch eine zentrale Zuführung 15 des Druckübertragungsfluids zugleich alle Kolben 7 und dementsprechend alle dadurch beweglichen Schneideplatten 4 mit demselben Druck beaufschlagt werden. In Verbindung mit dem gezeigten Referenzkörper 13 kommt es so zu einem inneren Ausgleich und zu einer übereinstimmenden Vorspannung gegenüber dem Referenzkörper 13, sodass diese Variante in der Praxis eine einfache und schnelle Einstellung aller Schneidplatten 4 ermöglicht.

### BEZUGSZEICHENLISTE

- 1: Vorrichtung
- 2: Drehachse
- 3: Fräskörper
- 4: Schneidplatte
- 5: Aufnahme

- 6: Klemmkörper
- 7: Kolben
- 8: Stellmittel
- 9: Schneide
- 10: Auflage

- 11: Verdrängerkörper
- 12: Fluidkanal
- 13: Referenzkörper
- 14: Ausnehmung
- 15: Zuführung

## Patentansprüche

1. Eine mobile Vorrichtung (1) zum Fräsen eines Profils einer für Schienenfahrzeuge bestimmten Gleisschiene, mit einer Lauffläche und einer Seitenfläche, wobei die Vorrichtung (1) in einer Vorschubrichtung entlang einer Längserstreckung des Profils beweglich ist und zumindest einen um eine Drehachse (2) rotationsbeweglich antreibbaren Fräskörper (3) mit einer Vielzahl von Schneidplatten (4) aufweist, wobei zumindest einzelne der Schneidplatten (4) zur Fixierung in einer jeweiligen Aufnahme (5) mittels jeweils zumindest eines Klemmkörpers (6) gegen ein als Anschlag ausgeführtes Widerlager eines Referenzkörpers (13) gemäß Anspruch 8 kraftschlüssig vorspannbar sind, wobei die zumindest einzelnen der Schneidplatten (4) in ihrer jeweiligen Aufnahme (5) mittels eines Stellmittels (8) in radialer und/oder axialer Richtung auslenkbar und mittels des Klemmkörpers (6) in der eingestellten Position festlegbar sind, wobei das Stellmittel (8) durch ein Druckübertragungsfluid beweglich und/oder verformbar ausgeführt ist, **dadurch gekennzeichnet, dass** jeweils mehrere Schneidplatten (4) in parallelen Spuren angeordnet sind, die jeweils einem Abschnitt des Querprofils des Profils zugeordnet sind, wobei mehrere der in benachbarten parallelen Spuren angeordneten Schneidplatten (4) zueinander einen Versatz in Umfangsrichtung des Fräskörpers (3) aufweisen, wodurch eine gleichmäßige Verteilung des Schneideingriffs der Schneidplatten (4) erreicht wird.

2. Vorrichtung (1) nach Anspruch 1, **dadurch gekennzeichnet, dass** die Schneidplatten (4) mit ihrer Hauptachse eine radiale oder axiale Orientierung in der Aufnahme (5) einnehmen und mit einer einer Schneide (9) der Schneidplatte (4) abgewandten Fläche auf einer mit dem Stellmittel (8) kinematisch gekoppelten Auflage (10) der Aufnahme (5) aufliegen.

3. Vorrichtung (1) nach Anspruch 1 oder 2, **dadurch gekennzeichnet, dass** mehrere Auflagen (10) derselben und/oder verschiedener Aufnahmen (5) gemeinsam von dem Druckübertragungsfluid beaufschlagbar sind, indem mehrere Stellmittel (8) gemeinsam durch kommunizierende Verbindung des Druckübertragungsfluids ansteuerbar sind, um so die gewünschte Soll-Position der Schneidplatten (4) mit der gewünschten, reproduzierbaren Genauigkeit einstellen zu können.

4. Vorrichtung (1) nach zumindest einem der vorhergehenden Ansprüche, **dadurch gekennzeichnet, dass** die Vorrichtung (1) zur Anpassung des Fluiddrucks des Druckübertragungsfluids zumindest einen auf das Druckübertragungsfluid wirkenden, einstellbaren Verdrängerkörper (11) aufweist.

5. Vorrichtung nach zumindest einem der vorhergehenden Ansprüche, **dadurch gekennzeichnet, dass** die Klemmkörper (6) mittels einer Schraubverbindung einstellbar sind, die durch gegensinnige Drehrichtung entweder zur Fixierung oder zur Trennung der Klemmkörper (6) ausgeführt sind.

6. Verfahren zur Einstellung zumindest einzelner Schneidplatten (4) einer Vorrichtung (1) nach zumindest einem der vorhergehenden Ansprüche relativ zu der jeweiligen Aufnahme (5) der Vorrichtung (1), wobei das Stellmittel (8) durch ein Druckübertragungsfluid ausgelenkt wird, indem der Fluiddruck durch einen als Verdränger wirkenden Verdrängerkörper (11) verändert und dadurch das Stellmittel (8) eingestellt wird, bis eine dem Stellmittel (8) abgewandte Schneide (9) der jeweiligen Schneidplatte (4) eine gewünschte Sollposition erreicht hat.

7. Verfahren nach Anspruch 6, **dadurch gekennzeichnet, dass** mehrere Schneidplatten (4) mit einer vorbestimmten Kraft mittels des jeweiligen Stellmittels (8) gegen einen Referenzkörper (13) gemäß Anspruch 8 bewegt werden, indem der Fluiddruck durch den Verdrängerkörper (11) verändert und dadurch das Stellmittel (8) eingestellt wird, bis eine dem Stellmittel (8) abgewandte Schneide (9) der jeweiligen Schneidplatte (4) eine gewünschte Sollposition erreicht hat, in der die jeweilige Schneidplatte (4) mit der vorbestimmten Kraft gegen den Referenzkörper (13) anliegt.

8. Referenzkörper (13) zur Verwendung bei einer mobilen Vorrichtung (1) nach zumindest einem der Ansprüche 1 bis 5 und/oder zur Durchführung des Verfahrens nach Anspruch 7, **dadurch gekennzeichnet, dass** der Referenzkörper (13) konvex ausgeführt ist und in einer definierten relativen Sollposition zu der Vorrichtung (1) als Widerlager für zumindest einzelne Schneidplatten (4) der mobilen Vorrichtung (1) dient und hinsichtlich des relevanten Querprofils der zu erzeugenden Soll-Form des zu fräsenden Profils entspricht, und dass der Referenzkörper (13) mehrere, insbesondere für ein Werkzeug zur Betätigung des jeweiligen Klemmkörpers (6) der mobilen Vorrichtung (1) bestimmte Ausnehmungen (14) aufweist. durch die hindurch der jeweilige Klemmkörper (6) betätigbar ist und so die zumindest einzelnen Schneidplatten (4) in ihrer jeweiligen Aufnahme (5) fixierbar sind.

## Claims

1. Mobile device (1) for milling a profile of a rail track intended for rail-bound vehicles, having a running surface and a side surface, wherein the device (1) is movable in a feed direction along a longitudinal extent of the profile and has at least one milling body (3), with a plurality of cutting plates (4), which can be driven in a rotationally movable manner about an axis of rotation (2), wherein at least some of the cutting plates (4) can be pretensioned non-positively for fixing in one respective receiver (5) by means of in each case at least one clamping body (6) against an abutment designed as a stop of a reference body (13) according to Claim 8, wherein the at least some of the cutting plates (4) can be deflected in their respective receiver (5) in the radial and/or axial direction by means of an adjusting means (8) and can be fixed in the adjusted position by means of the clamping body (6), wherein the adjusting means (8) is designed to be movable and/or deformable by a pressure transmission fluid, **characterized in that** in each case a plurality of cutting plates (4) are arranged in parallel tracks, which are assigned in each case to a portion of the transverse profile of the profile, wherein a plurality of the cutting plates (4), which are arranged in adjacent parallel tracks, have an offset to one another in the peripheral direction of the milling body (3), as a result of which a uniform distribution of the cutting engagement of the cutting plates (4) is achieved.

2. Device (1) according to Claim 1, **characterized in that** the cutting plates (4) adopt a radial or axial orientation in the receiver (5) with their main axis and with a surface facing away from a cutting edge (9) of the cutting plate (4) are positioned on a support (10) of the receiver (5) which is kinematically coupled to the adjusting means (8).

3. Device (1) according to Claim 1 or 2, **characterized in that** a plurality of supports (10) thereof and/or different receivers (5) can be subjected jointly to the pressure transmission fluid **in that** a plurality of adjusting means (8) can be activated jointly by a communicating connection of the pressure transmission fluid in order to be able to adjust the desired reference position of the cutting plates (4) with the desired reproducible accuracy.

4. Device (1) according to at least one of the preceding claims, **characterized in that** for adapting the fluid pressure of the pressure transmission fluid the device (1) has at least one adjustable displacement body (11) which acts on the pressure transmission fluid.

5. Device according to at least one of the preceding claims, **characterized in that** the clamping bodies (6) are adjustable by means of a screw connection, which is designed either for fixing or for disconnecting the clamping bodies (6) by rotating in opposing directions.

6. Method for adjusting at least individual cutting plates (4) of a device (1) according to at least one of the preceding claims relative to the respective receiver (5) of the device (1), wherein the adjusting means (8) is deflected by a pressure transmission fluid, by the fluid pressure being changed by a displacement body (11) acting as a displacer, and the adjusting means (8) is adjusted thereby until a cutting edge (9) of the respective cutting plate (4), which faces away from the adjusting means (8), has reached a desired reference position.

7. Method according to Claim 6, **characterized in that** a plurality of cutting plates (4) are moved with a predetermined force by means of the respective adjusting means (8) against a reference body (13) according to Claim 8, by the fluid pressure being changed by the displacement body (11), and the adjusting means (8) is adjusted thereby until a cutting edge (9) of the respective cutting plate (4), which faces away from the adjusting means (8), has reached a desired reference position in which the respective cutting plate (4) rests on the reference body (13) with the predetermined force.

8. Reference body (13) for use in a mobile device (1) according to at least one of Claims 1 to 5 and/or for carrying out the method according to Claim 7, **characterized in that** that the reference body (13) is designed to be convex and in a defined relative reference position to the device (1) serves as an abutment for at least individual cutting plates (4) of the mobile device (1) and corresponds to the reference shape to be generated of the profile to be milled with regard to the relevant transverse profile, and **in that** the reference body (13) has a plurality of recesses (14) intended, in particular, for a tool for actuating the respective clamping body (6) of the mobile device (1), through which the respective clamping body (6) can be actuated and thus the at least some of the cutting plates (4) can be fixed in their respective receiver (5).

## Revendications

1. Dispositif mobile (1) pour fraiser le profil d'un rail destiné à des véhicules ferroviaires, présentant une surface de roulement et une surface latérale, le dispositif (1) étant mobile dans une direction d'avance le long d'une extension longitudinale du profilé et comportant au moins un corps de fraisage (3) apte à être entraîné en rotation autour d'un axe de rotation (2) et muni d'une pluralité de plaquettes de coupe (4), au moins certaines des plaquettes de coupe (4) étant aptes à être fixées par force dans un logement respectif (5) au moyen d'au moins un corps de serrage (6) contre une butée réalisée sous forme de contre-appui d'un corps de référence (13) selon la revendication 8, lesdites au moins certaines des plaquettes de coupe (4) étant aptes à être déviées dans leur logement respectif (5) dans la direction radiale et/ou axiale au moyen d'un moyen de réglage (8) et étant aptes à être fixées dans la position réglée au moyen du corps de serrage (6), le moyen de réglage (8) étant mobile et/ou déformable par un fluide de transmission de pression, **caractérisé en ce que** plusieurs plaquettes de coupe (4) sont agencées dans des rainures parallèles, qui sont chacune associées à une partie du profil transversal du profil, plusieurs des plaquettes de coupe (4) agencées dans des rainures parallèles voisines présentant un décalage les unes par rapport aux autres dans la direction circonférentielle du corps de fraisage (3), ce qui permet d'obtenir une répartition uniforme de l'engagement de coupe des plaquettes de coupe (4).

2. Dispositif (1) selon la revendication 1, **caractérisé en ce que** les plaquettes de coupe (4) ont leur axe principal orienté radialement ou axialement dans le logement (5) et reposent avec une surface opposée à une arête de coupe (9) de la plaquette de coupe (4) sur un support (10) du logement (5) relié cinématiquement au moyen de réglage (8).

3. Dispositif (1) selon la revendication 1 ou la revendication 2, **caractérisé en ce que** plusieurs supports (10) des logements (5), identiques et/ou différents, sont aptes à être actionnés conjointement par le fluide de transmission de pression, plusieurs moyens de réglage (8) étant aptes à être commandés conjointement par une liaison de communication du fluide de transmission de pression, afin de pouvoir régler la position cible souhaitée des plaquettes de coupe (4) avec la précision souhaitée et avec la précision souhaitée et reproductible.

4. Dispositif (1) selon au moins une des revendications précédentes, **caractérisé en ce que** le dispositif (1) comporte, pour adapter la pression du fluide de transmission de pression, au moins un corps réglable de refoulement (11) agissant sur le fluide de transmission de pression.

5. Dispositif selon au moins une des revendications précédentes, **caractérisé en ce que** les corps de serrage (6) sont réglables au moyen d'une liaison vissée qui, par rotation dans des sens opposés, sert soit à fixer, soit à séparer les corps de serrage (6).

6. Procédé pour régler au moins certaines plaquettes de coupe (4) d'un dispositif (1) selon au moins une des revendications précédentes par rapport au logement (5) correspondant du dispositif (1), le moyen de réglage (8) étant dévié par un fluide de transmission de pression, la pression du fluide étant modifiée par un corps de refoulement (11) agissant comme un organe de refoulement, ce qui permet de régler le moyen de réglage (8) jusqu'à ce qu'une lame (9) de la plaquette de coupe (4) respective, opposée au moyen de réglage (8), ait atteint une position cible souhaitée.

7. Procédé selon la revendication 6, **caractérisé en ce qu'**une pluralité de plaquettes de coupe (4) sont déplacées avec une force prédéterminée au moyen du moyen de réglage (8) respectif contre un corps de référence (13) selon la revendication 8, en modifiant la pression du fluide par le corps de refoulement (11) et en réglant ainsi le moyen de réglage (8) jusqu'à ce qu'une lame (9) de la plaquette de coupe (4) respective, opposée au moyen de réglage (8), atteigne une position cible souhaitée dans laquelle la plaquette de coupe (4) respective s'appuie contre le corps de référence (13) avec la force prédéterminée.

8. Corps de référence (13) destiné à être utilisé dans un dispositif mobile (1) selon au moins une des revendications 1 à 5 et/ou pour la mise en œuvre du procédé selon la revendication 7, **caractérisé en ce que** le corps de référence (13) est de conception convexe et sert, dans une position de référence relative définie par rapport au dispositif (1), de butée pour au moins certaines plaquettes de coupe (4) du dispositif mobile (1) et correspond, en ce qui concerne le profil transversal pertinent de la forme de référence à réaliser, du profil à fraiser, et **en ce que** le corps de référence (13) présente une pluralité d'évidements (14) destinés en particulier à un outil pour actionner le corps de serrage (6) correspondant du dispositif mobile (1), au moyen desquels le corps de serrage (6) correspondant est apte à être actionné et lesdites au moins différentes plaquettes de coupe (4) sont ainsi aptes à être fixées dans leurs logements (5) respectifs.
